# EUROPEAN PATENT APPLICATION

(11) **EP 4 803 979 A1**
(43) Date of publication of application: **09.09.2026**
(21) Application number: 24902429.0
(22) Date of filing: 04.11.2024
(51) Int. Cl.: G06F 3/01, G06F 3/04815, G06F 3/0346

(54) **CONTROL METHOD AND APPARATUS FOR NEAR-TO-EYE DISPLAY DEVICE, AND DEVICE AND STORAGE MEDIUM**

(30) Priority: 15.12.2023 CN 202311739489
(71) Applicant: Meta-Bounds Inc., Zhuhai, Guangdong 519000 (CN)
(72) Inventor: HUANG, Yiran, Zhuhai, Guangdong 519000 (CN)
(74) Representative: Knöner, Gregor
(86) International application number: PCT/CN2024/129773
(87) International publication number: WO 2025/124005

(57) **Abstract**

A method for controlling a near-eye display device includes the following steps: pose data of the near-eye display device is obtained (S101); a target interactive object in a user interface of the near-eye display device is determined according to the pose data of the near-eye display device (S102); and a corresponding operation is performed on the target interactive object according to operation information received by the near-eye display device (S103). An apparatus, a device, and a storage medium are further provided.

## Description

The present disclosure claims the priority to Chinese Patent Application No. 202311739489X, filed with the China National Intellectual Property Administration on December 15, 2023 and entitled "Method and apparatus for controlling near-eye display device, and device", which is incorporated in its entirety herein by reference.

### Technical Field

The present disclosure relates to the field of human-computer interaction technologies, and particularly relates to a method and apparatus for controlling a near-eye display device, a device, and a storage medium.

### Background

At present, during use of a near-eye display device, a user needs to raise arms to control the near-eye display device. For instance, when the user controls the near-eye display device through a mobile phone, a handle, or another device, the user may raise the mobile phone or the handle and perform a corresponding operation on the mobile phone or the handle, to control the near-eye display device. In this case, it is inconvenient for the user to control the near-eye display device. When time during which the user raises the mobile phone or the handle increases, the user's arms may easily feel tired, resulting in poor user interaction experience with the near-eye display device.

### Summary

A main objective of the present disclosure is to provide a method and apparatus for controlling a near-eye display device, a device, and a storage medium, so as to solve a technical problem of poor user interaction experience with the near-eye display device due to insufficient convenience in user control of the near-eye display device.

In a first aspect, the present disclosure provides a method for controlling a near-eye display device. The method includes the following steps:
pose data of the near-eye display device is obtained;
a target interactive object in a user interface of the near-eye display device is determined according to the pose data of the near-eye display device; and
a corresponding operation is performed on the target interactive object according to operation information received by the near-eye display device.

In a second aspect, the present disclosure further provides an apparatus for controlling a near-eye display device. The apparatus includes:
an obtainment module, configured to obtain pose data of the near-eye display device;
an interactive object determination module, configured to determine a target interactive object in a user interface of the near-eye display device according to the pose data of the near-eye display device; and
an interactive module, configured to perform a corresponding operation on the target interactive object according to operation information received by the near-eye display device.

In a third aspect, the present disclosure further provides a near-eye display device. The near-eye display device includes a memory and a processor. The memory is configured to store a computer program.

The processor is configured to execute the computer program, and implement, when executing the computer program, the following steps:
pose data of a near-eye display device is obtained;
a target interactive object in a user interface of the near-eye display device is determined according to the pose data of the near-eye display device; and
a corresponding operation is performed on the target interactive object according to operation information received by the near-eye display device.

In a fourth aspect, the present disclosure further provides a computer-readable storage medium. The computer-readable storage medium stores a computer program. When the computer program is executed by a processor, the following steps are implemented:
pose data of a near-eye display device is obtained;
a target interactive object in a user interface of the near-eye display device is determined according to the pose data of the near-eye display device; and
a corresponding operation is performed on the target interactive object according to operation information received by the near-eye display device.

The present disclosure provides the method and apparatus for controlling a near-eye display device, the device, and the storage medium. The method includes the following steps: the pose data of the near-eye display device is obtained; the target interactive object in the user interface of the near-eye display device is determined according to the pose data of the near-eye display device; and the corresponding operation is performed on the target interactive object according to the operation information received by the near-eye display device.

Based on the obtained pose data of the near-eye display device, the near-eye display device can determine an operation demand of a user on the user interface of the near-eye display device, and for instance, determine the target interactive object in the user interface. In a case that the target interactive object is determined, the corresponding operation may be performed on the target interactive object according to the operation information received by the near-eye display device, such that the near-eye display device is controlled. During the user achieving the near-eye display device, as the near-eye display device is worn on a head of the user, the user may adjust a pose of the near-eye display device by changing a head pose. In response to a change in the pose of the near-eye display device, the obtained pose data of the near-eye display device may change accordingly. Thus, the near-eye display device is controlled by obtaining the pose data of the near-eye display device, thus improving control convenience of the near-eye display device. For instance, the user does not need to raise an arm for a long time to control the near-eye display device, such that the arm of the user is less likely to feel tired, thus improving user interaction experience with the near-eye display device.

### Brief Description of the Drawings

In order to more clearly illustrate technical solutions of examples of the present disclosure, drawings required for description of the examples will be described briefly below. Obviously, the drawings in the following description are merely some examples of the present disclosure. Those of ordinary skill in the art can also obtain other drawings from these drawings without creative efforts.
Fig. 1 is a schematic flowchart of a method for controlling a near-eye display device according to an example of the present disclosure;
Fig. 2 is a schematic diagram of a head pose of a user according to an example of the present disclosure;
Fig. 3 is a schematic diagram of a user interface of a near-eye display device according to an example of the present disclosure;
Fig. 4 is a schematic diagram of a user interface of a near-eye display device according to another example of the present disclosure;
Fig. 5 is a schematic block diagram of an apparatus for controlling a near-eye display device according to an example of the present disclosure; and
Fig. 6 is a schematic structural block diagram of a near-eye display device according to an example of the present disclosure.

### Detailed Description of the Embodiments

Technical solutions of examples of the present disclosure will be clearly and completely described below in conjunction with accompanying drawings of the examples of the present disclosure. Obviously, the examples described are some examples rather than all examples of the present disclosure. Based on the examples of the present disclosure, all other examples obtained by those of ordinary skill in the art without making creative efforts fall within the protection scope of the present disclosure.

A flowchart shown in the accompanying drawings is illustrative, and is not intended to include all contents and operations/steps and not intended to be executed in the described order. For instance, some operations/steps may be decomposed, combined, or partially merged, so an actual execution order may change according to an actual situation.

The examples of the present disclosure provide a method and apparatus for controlling a near-eye display device, a device, and a storage medium.

The method for controlling the near-eye display device may be applied to the near-eye display device. Near-eye display devices may include Augmented Reality (AR) glasses, Virtual Reality (VR) glasses, AR headsets, VR headsets, etc., which are not limited herein.

Or, the method for controlling the near-eye display device may be applied to a server. The server may be an independent server, or a cloud server that provides basic cloud calculation services such as a cloud service, a cloud database, cloud calculation, a cloud function, cloud storage, a network service, cloud communication, a middleware service, a domain name service, a security service, a Content Delivery Network (CDN), big data, and an artificial intelligence platform.

Some embodiments of the present disclosure will be described in detail below with reference to the accompanying drawings. The following examples and features in the examples may be combined with each other without conflict.

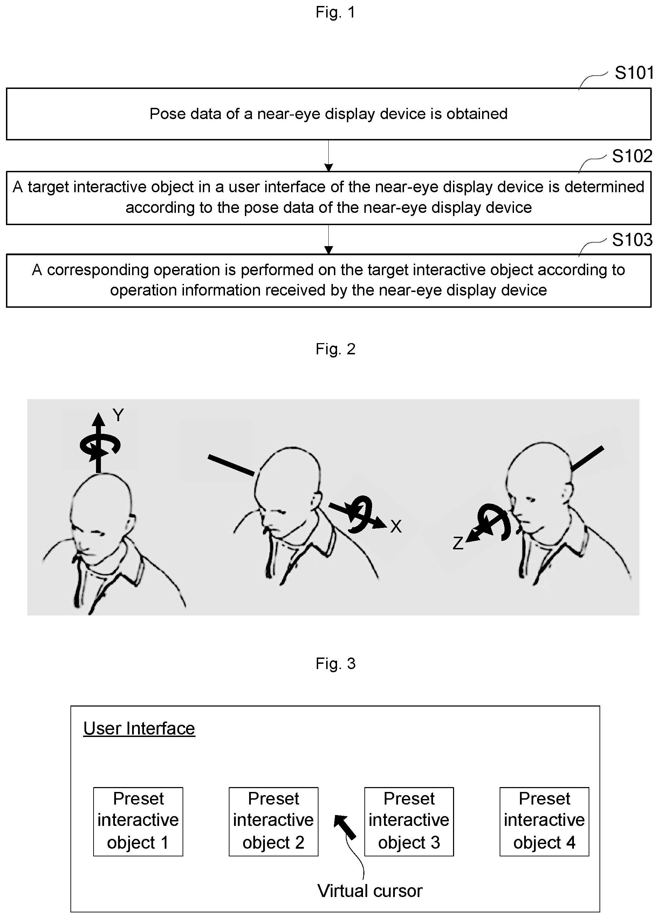

With reference to Fig. 1, Fig. 1 is a schematic flowchart of a method for controlling a near-eye display device according to an example of the present disclosure. It should be noted that the method for controlling the near-eye display device according to the example of the present disclosure may be used for the near-eye display device, or may be used for a server. For instance, the server may obtain pose data of the near-eye display device from the near-eye display device, so as to determine a target interactive object in a user interface of the near-eye display device. For instance, the server may send the target interactive object to the near-eye display device, such that the near-eye display device may further perform a corresponding operation on the target interactive object according to received operation information, which is clearly not restrictive, and is not limited herein.

As shown in Fig. 1, the method for controlling the near-eye display device includes the following steps S101 to S103.

S101, pose data of the near-eye display device is obtained.

For instance, the pose data of the near-eye display device may be determined according to sensor data collected by a sensor arranged in the near-eye display device. For instance, the sensor data may be used as the pose data of the near-eye display device, such that a pose of the near-eye display device is determined based on the pose data of the near-eye display device.

In some embodiments, 3 degrees of freedom (3DOF) rotation data of the near-eye display device may be obtained, and the 3DOF rotation data may be used as the pose data of the near-eye display device. As shown in Fig. 2, when the near-eye display device is worn on a head of a user, the sensor data obtained by the near-eye display device may be the head 3DOF rotation data of the user. The head 3DOF rotation data of the user may also be referred to as head pose data of the user, and the head pose data of the user may be configured to indicate a head pose of the user. For instance, when the head of the user rotates about a horizontal axis (X-axis) corresponding to the near-eye display device, the near-eye display device may obtain rotation angle data, such as a pitch angle, of head rotation. When the head of the user rotates about a longitudinal axis (Y-axis) corresponding to the near-eye display device, the near-eye display device may obtain rotation angle data, such as a yaw angle, of head rotation. When the head of the user rotates about a vertical axis (Z-axis) corresponding to the near-eye display device, the near-eye display device may obtain rotation angle data, such as a roll angle, of head rotation. In a case that the near-eye display device obtains at least one piece of the rotation angle data of the pitch angle, the yaw angle, and the roll angle, at least one piece of the obtained rotation angle data may be used as the pose data of the near-eye display device for subsequent control of the near-eye display device.

S102, a target interactive object in a user interface of the near-eye display device is determined according to the pose data of the near-eye display device.

For instance, the user may interact with the near-eye display device by adjusting the pose of the near-eye display device. In some embodiments, for instance, the near-eye display device may display the user interface of the near-eye display device to the user, and the user may interact with the user interface by adjusting the pose of the near-eye display device. The user interface may include at least one preset interactive object. The preset interactive object may include at least one of a virtual interactive object and a real interactive object. The virtual interactive object may include an icon, a button, a list, text, etc., and is not limited herein. For instance, the user may perform operations such as clicking, rotating, moving, editing, and deleting on the virtual interactive object through the near-eye display device, which is not limited herein. The real interactive object may include an object in an external real scene other than the near-eye display device. For instance, the user may perform operations such as adding a virtual effect, modifying a virtual effect, and deleting a virtual effect on the real interactive object through the near-eye display device, which is not limited herein. For instance, if the near-eye display device is AR glasses, due to optical characteristics of lenses of the AR glasses, for instance, because light provided by the external real scene may pass through the lenses of the AR glasses, in a case that the AR glasses display the user interface to eyes of the user, the user may still see the external real scene, and the user interface of the near-eye display device may also include the real interactive object.

Based on this, when the user needs to interact with the user interface of the near-eye display device, the target interactive object in the user interface may be determined by adjusting the pose of the near-eye display device. For instance, the pose of the near-eye display device may change in accordance with a change in the head pose of the user. In response to a change in the pose of the near-eye display device, the obtained pose data of the near-eye display device may change accordingly. Thus, the target interactive object in the user interface of the near-eye display device may be determined according to the pose data of the near-eye display device.

For instance, a position of a virtual cursor in the user interface is adjusted according to the pose data; and when a distance between the position of the virtual cursor in the user interface and a position of the preset interactive object in the user interface is less than or equal to a preset distance threshold, the preset interactive object is determined as the target interactive object.

In some embodiments, the virtual cursor may be displayed in the user interface. The virtual cursor may be configured to indicate a current interaction position of the user on the user interface. When the head of the user rotates about the Y-axis corresponding to the near-eye display device, and for instance, rotates leftward, according to the obtained pose data of the near-eye display device, it may be determined that the pose of the near-eye display device is leftward translation, and the near-eye display device may perform leftward translation on the position of the virtual cursor in the user interface. When the head of the user rotates about the X-axis corresponding to the near-eye display device, and for instance, rotates downward, according to the obtained pose data of the near-eye display device, it may be determined that the pose of the near-eye display device is downward movement, and the near-eye display device may move downward the position of the virtual cursor in the user interface. When the head of the user rotates about the Z-axis corresponding to the near-eye display device, and for instance, rotates obliquely upward, according to the obtained pose data of the near-eye display device, it may be determined that the pose of the near-eye display device is obliquely upward movement, and the near-eye display device may obliquely upward move the position of the virtual cursor in the user interface. Clearly, the above description is not restrictive. For instance, the near-eye display device may further perform rightward translation, upward movement, and obliquely downward movement on the position of the virtual cursor in the user interface according to the pose data, which is not limited herein. In a process of adjusting the position of the virtual cursor in the user interface according to the pose data, a position change rate of the virtual cursor, for instance, a moving speed of the virtual cursor in the user interface, may be preset or set by the user, which is not limited herein.

For instance, the preset interactive objects in the user interface include a preset interactive object 1 to a preset interactive object 4.

As shown in Fig. 3, the preset interactive object 1 to the preset interactive object 4 are arranged from left to right on the user interface, and the preset interactive object 1 to the preset interactive object 4 are horizontally aligned and distributed in the user interface. For instance, an initial position of the virtual cursor in the user interface is a position between a preset interactive object 2 and a preset interactive object 3. For instance, the virtual cursor may perform leftward translation from the initial position to a position of any one of the preset interactive object 1 and the preset interactive object 2 in the user interface in response to leftward rotation of the head of the user. Clearly, the above description is not restrictive. The virtual cursor may perform rightward translation from the initial position to a position of any one of the preset interactive object 3 and the preset interactive object 4 in the user interface in response to rightward rotation of the head of the user, which is not limited herein.

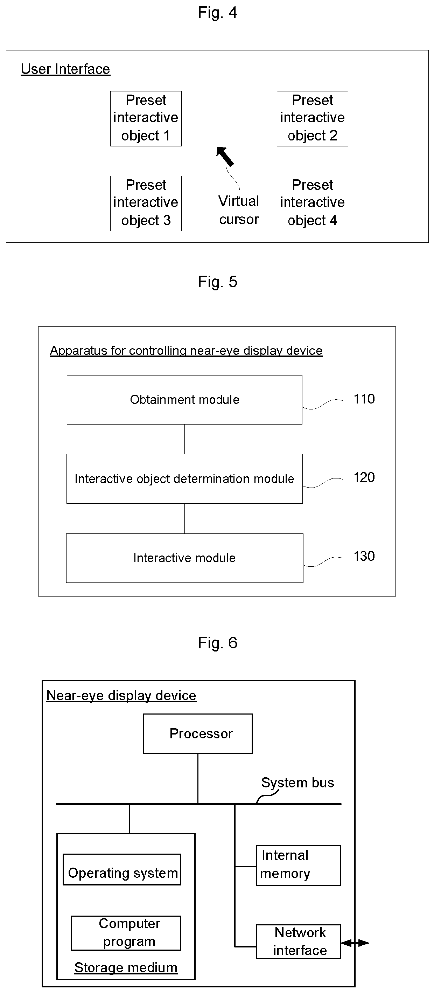

As shown in Fig. 4, the preset interactive object 1 and the preset interactive object 2 are horizontally aligned and distributed in the user interface, and the preset interactive object 3 and the preset interactive object 4 are horizontally aligned and distributed in the user interface. The preset interactive object 1 and the preset interactive object 3 are vertically aligned and distributed, and the preset interactive object 2 and the preset interactive object 4 are vertically aligned and distributed. In addition, the preset interactive object 1 is located above the preset interactive object 3, and the preset interactive object 2 is located above the preset interactive object 4. For instance, the initial position of the virtual cursor in the user interface is a midpoint between the preset interactive object 1 and the preset interactive object 4. For instance, the virtual cursor may move upward from the initial position to a position between the preset interactive object 1 and the preset interactive object 2 in response to upward rotation of the head of the user, or may move downward from the initial position to a position between the preset interactive object 3 and the preset interactive object 4 in response to downward rotation of the head of the user. Or, for instance, the virtual cursor may move obliquely upward from the initial position to the position of any one of the preset interactive object 1 and the preset interactive object 2 in response to obliquely upward rotation of the head of the user, or may move obliquely downward from the initial position to the position of any one of the preset interactive object 3 and the preset interactive object 4 in response to obliquely downward rotation of the head of the user. Clearly, the above description is not restrictive. The virtual cursor may perform leftward translation from the initial position to a position between the preset interactive object 1 and the preset interactive object 3 in response to leftward rotation of the head of the user, or the virtual cursor may perform rightward translation from the initial position to a position between the preset interactive object 2 and the preset interactive object 4 in response to rightward rotation of the head of the user, which is not limited herein.

For instance, in a process of adjusting the position of the virtual cursor in the user interface according to the pose data, the distance between the position of the virtual cursor and the position of the preset interactive object in the user interface may change. The position of the virtual cursor may be determined according to a center of the virtual cursor or one of angular points of the virtual cursor. The position of the preset interactive object may be determined according to a center of the preset interactive object or one of angular points of the preset interactive object. Moreover, position determination modes of different preset interactive objects in the same user interface are same. Clearly, the above description is not restrictive. Position determination modes of the virtual cursor and the preset interactive object may be preset or set by the user, and are not limited herein.

In a case that the distance between the position of the virtual cursor and the position of the preset interactive object in the user interface is determined, an operation demand of the user on the preset interactive object in the user interface may be determined according to the distance between the position of the virtual cursor and the position of the preset interactive object in the user interface.

For instance, the preset interactive objects in the user interface include a preset interactive object 1 and a preset interactive object 2, the preset interactive object 1 is located at a left side of the preset interactive object 2, and the preset interactive object 1 and the preset interactive object 2 are horizontally aligned and distributed. The initial position of the virtual cursor in the user interface may be a position between the preset interactive object 1 and the preset interactive object 2. When the virtual cursor leftward adjusts the position of the virtual cursor in the user interface according to the pose data, the virtual cursor may gradually approach the preset interactive object 1 and gradually move away from the preset interactive object 2. That is, a distance between the position of the virtual cursor in the user interface and a position of the preset interactive object 1 in the user interface is decreased, and a distance between the position of the virtual cursor in the user interface and a position of the preset interactive object 2 in the user interface is increased. When the distance between the position of the virtual cursor in the user interface and a position of the preset interactive object 1 is less than or equal to a preset position threshold, it may be determined that the user has an operation demand on the preset interactive object 1, and the preset interactive object 1 may be determined as the target interactive object. Clearly, the preset interactive object in the user interface is not limited to the preset interactive object 1 and the preset interactive object 2, and the position of the preset interactive object in the user interface is not restrictive, and is not limited herein.

In an illustrative embodiment, the initial position of the virtual cursor in the user interface may be closer to one of the preset interactive object 1 and the preset interactive object 2. For instance, a distance between the initial position of the virtual cursor in the user interface and the position of the preset interactive object 1 in the user interface is greater than the preset distance threshold, and the initial position of the virtual cursor in the user interface is less than or equal to the preset distance threshold. The condition that the distance between the virtual cursor and the preset interactive object is less than or equal to the preset distance threshold is used as the basis for determining the preset interactive object as the target interactive object. In this way, the situation that it is directly determined that the user has the operation demand on the preset interactive object 2 merely because the distance between the virtual cursor and the preset interactive object 2 is less than or equal to the preset distance threshold, then the preset interactive object 2 is directly determined as the target interactive object, and the user actually intends to operate the preset interactive object 1 may be avoided. Based on this, whether the preset interactive object is the target interactive object is determined by combining a changing trend of the distance between the position of the virtual cursor in the user interface and the position of the preset interactive object in the user interface and the preset distance threshold, such that accuracy of determining the target interactive object by the near-eye display device is improved. With improved accuracy in determining the target interactive object, the target interactive object may be controlled by the near-eye display device later, such that control accuracy of the near-eye display device is further improved.

In some embodiments, when distances between the position of the virtual cursor in the user interface and positions of a plurality of preset interactive objects in the user interface are less than or equal to the preset distance threshold, a preset interactive object having a minimum distance from the position of the virtual cursor is selected as the target interactive object from the plurality of preset interactive objects having the distances, less than or equal to the preset distance threshold, from the position of the virtual cursor.

For instance, as shown in Fig. 4, in a process of causing the virtual cursor to start to move obliquely upward to the left at a small angle from the initial position, distances of the virtual cursor from the preset interactive object 1 and the preset interactive object 3 may be less than or equal to the preset distance threshold. Then, the near-eye display device may select the preset interactive object closest to the virtual cursor from the preset interactive object 1 and the preset interactive object 3 as the target interactive object. For instance, when the distance between the position of the virtual cursor and the position of the preset interactive object 1 is less than the distance between the position of the virtual cursor and the position of the preset interactive object 3, the preset interactive object 1 may be determined as the target interactive object.

In some embodiments, when the distances between the position of the virtual cursor in the user interface and the positions of the plurality of preset interactive objects in the user interface are less than or equal to the preset distance threshold and the plurality of preset interactive objects having the distances, less than or equal to the preset distance threshold, from the position of the virtual cursor have a same distance from the virtual cursor, prompt information is output. The target interactive object is determined from the plurality of preset interactive objects having the distances, less than or equal to the preset distance threshold, from the position of the virtual cursor according to feedback information corresponding to the prompt information.

For instance, as shown in Fig. 4, when the virtual cursor starts to perform rightward translation from the initial position, distances of the virtual cursor from the preset interactive object 2 and the preset interactive object 4 may be less than or equal to the preset distance threshold. In addition, the distances of the virtual cursor from the preset interactive object 2 and the preset interactive object 4 may be consistent. Based on this, the near-eye display device may output the prompt information. In an illustrative embodiment, the prompt information may be configured to instruct the user to determine the target interactive object from the plurality of preset interactive objects having the distances, less than or equal to the preset distance threshold, from the position of the virtual cursor. For instance, the prompt information may instruct the user to determine the target interactive object from the preset interactive object 2 and the preset interactive object 4. When the near-eye display device receives the feedback information corresponding to the prompt information, the target interactive object may be determined according to the feedback information. For instance, in a case that the user determines the preset interactive object 4 as the target interactive object based on the prompt information, the feedback information corresponding to the prompt information may carry identifier information of the preset interactive object 4. Then, the near-eye display device may determine the preset interactive object 4 as the target interactive object according to the identifier information of the preset interactive object 4 carried in the feedback information. Clearly, the above description is not restrictive, and is not limited herein.

In this way, the target interactive object in the user interface of the near-eye display device may be determined according to the pose data of the near-eye display device. For instance, the position of the virtual cursor in the user interface may be adjusted according to the pose data of the near-eye display device. When the distance between the position of the preset interactive object and the position of the virtual cursor in the user interface is less than or equal to the preset distance threshold, the preset interactive object may be determined as the target interactive object, such that convenience of determining the target interactive object by the near-eye display device is improved.

In some embodiments, the virtual cursor in the user interface is snapped onto the target interactive object.

For instance, after the target interactive object in the user interface of the near-eye display device is determined, the virtual cursor in the user interface may be snapped onto the target interactive object.

In a case that the target interactive object determined by the near-eye display device is a button, the virtual cursor may be snapped onto the button, thus facilitating subsequent user operations on the button.

In a case that the target interactive object determined by the near-eye display device is a character or word of text, the virtual cursor may be snapped onto the character or word of the text, such that the user may edit, select, locate or perform other operations on the text based on the character or word of the text later.

In a case that the target interactive object determined by the near-eye display device is a function list, the virtual cursor may be snapped onto the function list, such that the user may select a corresponding function based on the function list later.

In a case that the target interactive object determined by the near-eye display device is the real interactive object, the virtual cursor may be snapped onto the real interactive object, such that the user may add, modify, or delete a corresponding virtual effect for the real interactive object later.

The virtual cursor is snapped onto the target interactive object, such that the position where the virtual cursor is located may indicate to the user that the preset interactive object is the target interactive object. Then, the user may perform a subsequent operation on the target interactive object according to an indication of the virtual cursor, or continues to adjust the pose of the near-eye display device to reselect the target interactive object.

In some embodiments, the target interactive object may be determined when the distance between the position of the virtual cursor and the position of the preset interactive object in the user interface is reduced to be less than or equal to the preset distance threshold. In a case that the user wears the near-eye display device on the head and adjusts the pose of the near-eye display device by rotating the head, the virtual cursor in the user interface is snapped onto the target interactive object, and then the user may interact with the target interactive object without further rotating the head. Based on this, the virtual cursor in the user interface is snapped onto the target interactive object, such that a needing movement range for the user to adjust the pose of the near-eye display device is reduced, and further convenience for the user to adjust the pose of the near-eye display device is improved. Moreover, the virtual cursor is snapped onto the target interactive object, such that the position of the virtual cursor in the user interface is changed from a position having the distance, less than or equal to the preset distance threshold, from the target interactive object to the position of the target interactive object in the user interface. In this way, time required for adjusting the position of the virtual cursor in the user interface may be reduced, and efficiency of the near-eye display device in adjusting the position of the virtual cursor may be improved. Thus, with improved efficiency of the near-eye display device in adjusting the position of the virtual cursor, the near-eye display device may more conveniently determine the target interactive object from one or more preset interactive objects in the user interface, such that selection efficiency of the near-eye display device for the target interactive object is improved.

For instance, after the virtual cursor in the user interface is snapped onto the target interactive object, the near-eye display device may further adjust a display form, a display effect, etc. of the virtual cursor snapped onto the target interactive object.

For instance, the display form of the virtual cursor snapped onto the target interactive object is determined according to an object type of the target interactive object.

In a case that different target interactive objects have different object types, display forms of the virtual cursor snapped onto different target interactive objects may be different.

For instance, the target interactive objects include the virtual interactive object and the real interactive object. The virtual interactive object is a virtual element, and the real interactive object is a real element. Thus, an object type of the virtual interactive object is different from an object type of the real interactive object.

In a case that the target interactive object is the virtual interactive object, when the near-eye display device snaps the virtual cursor onto the virtual interactive object, the display form of the virtual cursor may be embodied as being snapped onto a surface of the virtual interactive object, that is, the virtual cursor may be presented on the surface. In this case, the virtual cursor may also be referred to as an on-surface cursor. For instance, the same virtual interactive object may include a plurality of surfaces, and the plurality of surfaces included in the virtual interactive object are all available for the user to perform a subsequent operation. The virtual cursor is snapped onto the surface of the virtual interactive object, thus indicating to the user that a current interactive object is a surface onto which the virtual cursor is currently snapped. According to the indication of the virtual cursor, the user may operate the surface, onto which the virtual cursor is currently snapped, of the virtual interactive object, and for instance, adjust a shape of the surface, and add a virtual effect. Or, the user may reselect any one of other surfaces of the virtual interactive object or other interactive objects for subsequent operations, which is not limited herein.

In a case that the target interactive object is the real interactive object, when the near-eye display device snaps the virtual cursor onto the real interactive object, the display form of the virtual cursor may be embodied as being snapped onto a sphere corresponding to the real interactive object, that is, the virtual cursor may be presented on the sphere. In this case, the virtual cursor may also be referred to as an on-sphere cursor. The sphere corresponding to the real interactive object may be a virtual effect added to the real interactive object in the user interface. The sphere corresponding to the real interactive object may cover a position range corresponding to the real interactive object in the user interface, and is not limited herein. For instance, as the real interactive object is an object located in an external real scene, the user cannot change a position of the real interactive object in the external real scene through the near-eye display device, and for instance, cannot rotate or move the real interactive object. However, the user may add a virtual effect to the real interactive object in the user interface. In this case, the virtual cursor is snapped onto the sphere corresponding to the real interactive object, thus indicating to the user that the current interactive object is the entire real interactive object. According to the indication of the virtual cursor, the user may operate the entire real interactive object, or may reselect other interactive objects for subsequent operations, which is not limited herein.

Thus, different display forms of the virtual cursor snapped onto target interactive objects of different object types may indicate respective object types of different target interactive objects to the user. For instance, the different target interactive objects include the virtual interactive object and the real interactive object. If the display form of the virtual cursor snapped onto a target interactive object is being snapped onto a surface of the target interactive object, the user may determine that the target interactive object is the virtual interactive object. If the display form of the virtual cursor snapped onto another target interactive object is being snapped onto a sphere corresponding to the target interactive object, the user may determine that the target interactive object is the real interactive object. The user may distinguish the object type of the target interactive object according to the display form of the virtual cursor. Thus, when the user operates the target interactive object later, an appropriate operation may be selected by combining the object type of the target interactive object, such that convenience of the user in identifying and operating the target interactive object is improved.

For instance, the display effect of the virtual cursor snapped onto the target interactive object is determined according to UI (User Interface) control information of the target interactive object.

For instance, the UI control information of the target interactive object may be configured to indicate whether the target interactive object is an interaction control available for user interaction, such as a tab icon, a button, a list, or an application icon.

For instance, the target interactive object is the tab icon. The tab icon may include an icon or a tab involved in a User Interface (UI) design of the user interface. A background color of the tab icon may change with change of a background color of a position, where the tab icon is located, in the user interface, which means that the tab icon may be a tab icon without a background. Based on this, in a case that the target interactive object onto which the virtual cursor is snapped is the tab icon, a highlighting display effect may be added to at least one of the virtual cursor and the tab icon, so as to indicate to the user that the tab icon is the target interactive object, and to distinguish the tab icon serving as the target interactive object from other preset interactive objects in the user interface except the target interactive object. The virtual cursor with the added highlighting display effect may be presented as a contour color of the virtual cursor changed to a highlight color, a highlight light ring added to a tip of the virtual cursor, or other forms, and is not limited herein. The tab icon with the added highlighting display effect may be presented as a contour color of the tab icon changed to a highlight color, a highlight light ring added to an interior of the tab icon, or other forms, and is not limited herein.

For instance, the target interactive object is any one of a button and a list. A background color of the button may not change with change of a background color of a position, where the button is located, in the user interface, and a background color of the list may not change with change of a background color of a position, where the list is located, in the user interface. That is, the button may be a button with a background, and the list may be a list with a background. Based on this, in a case that the target interactive object onto which the virtual cursor is snapped is any one of the button and the list, a raising display effect may be added to the virtual cursor, so as to indicate to the user that any one of the button and the list is the target interactive object, and to distinguish the button or list serving as the target interactive object from other preset interactive objects in the user interface except the target interactive object. When the virtual cursor with the raising display effect is snapped onto the button, the button may be slightly pressed or bounced, and when the virtual cursor with the raising display effect is snapped onto the list, the background color of the list may change slightly, which is not limited herein.

For instance, the target interactive object is the application icon. In a case that the target interactive object onto which the virtual cursor is snapped is the application icon, a hovering display effect may be added to the virtual cursor, so as to indicate to the user that the application icon is the target interactive object, and to distinguish the application icon serving as the target interactive object from preset interactive objects in the user interface except the target interactive object. When the virtual cursor with a hovering display effect is snapped onto the application icon, the application icon may move along a preset movement path or a size of the application icon may be increased, which is not limited herein.

Clearly, the display effect of the virtual cursor snapped onto the target interactive object is not limited to the above description. An association relationship between the UI control information corresponding to the target interactive object and the display effect of the virtual cursor snapped onto the target interactive object may be preset or set by the user, which is not limited herein.

Thus, when the target interactive objects correspond to different UI control information, display effects of the virtual cursor snapped onto the different target interactive objects may be different. The user may determine the object type of the target interactive object onto which the virtual cursor is currently snapped, or determine the UI control information corresponding to the target interactive object onto which the virtual cursor is currently snapped according to different display effects of the virtual cursor. Based on this, the subsequent operation may be performed on the target interactive object, and convenience of the user in identifying and operating the target interactive object is improved.

In some embodiments, when the near-eye display device receives an invocation instruction corresponding to the virtual cursor, the virtual cursor is displayed in the user interface.

For instance, the near-eye display device may determine whether the invocation instruction corresponding to the virtual cursor is received according to at least one of an operation of the user on the near-eye display device and an operation of the user on a device communicatively connected to the near-eye display device. The invocation instruction corresponding to the virtual cursor may be preset or set by the user, which is not limited herein.

For instance, the user may send the invocation instruction corresponding to the virtual cursor to the near-eye display device through a touch operation, a pressing operation, or another operation on the control device corresponding to the near-eye display device. The control device is communicatively connected to the near-eye display device. The communication connection may include Bluetooth connection, Wireless Fidelity (WiFi) connection, and another connection, and is not limited herein. The control device may include a smart ring, a smart bracelet, or another device, and is not limited herein. For instance, when the near-eye display device receives a first invocation signal transmitted by the control device, it is determined that the invocation instruction corresponding to the virtual cursor is received, and the virtual cursor is displayed in the user interface.

For instance, if the control device is a smart ring, the user may press or touch the smart ring once, to cause the smart ring to transmit the first invocation signal to the near-eye display device. In a case that the near-eye display device receives the first invocation signal transmitted by the smart ring, it may be determined that the invocation instruction corresponding to the virtual cursor is received. Then, the virtual cursor may be displayed in the user interface according to the received invocation instruction. Based on the virtual cursor displayed in the user interface, the user may adjust the position of the virtual cursor in the user interface by adjusting the pose of the near-eye display device.

Clearly, the above description is not restrictive. The user may send the invocation instruction corresponding to the virtual cursor to the near-eye display device through a touch operation, a pressing operation, or another operation on the near-eye display device. For instance, a touch zone or a pressing zone may be configured on a device body of the near-eye display device. With eyewear devices such as AR glasses and VR glasses as the near-eye display devices as an instance, the device body of the near-eye display device may include temples, a glasses frame, and other parts, and is not limited herein. The near-eye display device may determine that the invocation instruction corresponding to the virtual cursor is received in response to preset operation information received by the device body of the near-eye display device, so as to display the virtual cursor in the user interface.

For instance, if the near-eye display device is AR glasses, VR glasses, or another eyewear device and the near-eye display device includes temples configured with touch zones, the user may press or touch the temples of the near-eye display device once, to cause the near-eye display device to determine that the invocation instruction corresponding to the virtual cursor is received according to the received single pressing operation or single touch operation. Then, the virtual cursor may be displayed in the user interface according to the received invocation instruction. Based on the virtual cursor displayed in the user interface, the user may adjust the position of the virtual cursor in the user interface by adjusting the pose of the near-eye display device.

In some other embodiments, the user may send the invocation instruction corresponding to the virtual cursor to the near-eye display device through voice. For instance, the user may say "invoke a virtual cursor", "display a virtual cursor", or other voice configured to instruct the near-eye display device to invoke the virtual cursor. The near-eye display device may determine that the invocation instruction corresponding to the virtual cursor is received according to the voice of the user. Then, the virtual cursor may be displayed in the user interface according to the received invocation instruction, which is not limited herein.

In this way, the virtual cursor is displayed in the user interface when the near-eye display device receives the invocation instruction corresponding to the virtual cursor. Then, when the user selects the target interactive object from the preset interactive objects in the user interface, the user may change the pose of the near-eye display device by changing the head pose, to cause the pose data of the near-eye display device to change. The position of the virtual cursor in the user interface may be adjusted in response to a change in the pose data of the near-eye display device. The user may actively invoke the virtual cursor as required, such that convenience of the near-eye display device in invoking the virtual cursor is improved. Further, when the near-eye display device does not receive the invocation instruction corresponding to the virtual cursor, the virtual cursor may not be displayed in the user interface, so as to avoid additional display energy consumption of the user interface. In this way, energy consumption of the near-eye display device is reduced.

In some embodiments, if it is determined that the pose data of the near-eye display device is unchanged within a preset period after the virtual cursor is displayed in the user interface, the virtual cursor is hidden in the user interface.

For instance, the user may adjust the pose of the near-eye display device by changing the head pose. Thus, in response to the change in the pose of the near-eye display device, the obtained pose data of the near-eye display device may change accordingly. Based on this, after the virtual cursor is displayed in the user interface, the near-eye display device may still continuously obtain the pose data of the near-eye display device, to determine whether the user has the operation demand on the virtual cursor. For instance, within the preset period after the virtual cursor is displayed in the user interface, the pose data of the near-eye display device continues being obtained. The preset period may be preset or set by the user, and is not limited herein.

If it is determined that the pose data of the near-eye display device is unchanged within the preset period after the virtual cursor is displayed in the user interface, it may be determined that the user does not operate the virtual cursor for a long time, that is, it may be determined that the user currently has no operation demand on the virtual cursor. Based on this, the virtual cursor is hidden in the user interface, so as to avoid additional display energy consumption of the user interface. In this way, energy consumption of the near-eye display device is reduced. In addition, when duration in which the virtual cursor is in a displayed state and the near-eye display device is unchanged reaches the preset period, the near-eye display device may hide the virtual cursor in the user interface, such that convenience of the near-eye display device in stopping invocation of the virtual cursor is improved.

Clearly, the above description is not restrictive. The user may actively choose to stop invoking the virtual cursor or not. For instance, the user may actively send an invocation stop instruction corresponding to the virtual cursor to the near-eye display device, and the near-eye display device may hide the virtual cursor in the user interface according to the received invocation stop instruction. The invocation stop instruction corresponding to the virtual cursor may be preset or set by the user, which is not limited herein.

For instance, the user may send the invocation stop instruction corresponding to the virtual cursor to the near-eye display device through a touch operation, a pressing operation, or another operation on the control device corresponding to the near-eye display device.

For instance, if the control device is a smart ring, the user may press or touch the smart ring twice, to cause the smart ring to transmit a second invocation signal to the near-eye display device. In a case that the near-eye display device receives the second invocation signal transmitted by the smart ring, it may be determined that the invocation stop instruction corresponding to the virtual cursor is received. Then, the virtual cursor may be hidden in the user interface according to the received invocation stop instruction.

For instance, the user may send the invocation stop instruction corresponding to the virtual cursor to the near-eye display device through a touch operation, a pressing operation, or another operation on the near-eye display device.

For instance, if the near-eye display device is AR glasses, VR glasses, or another eyewear device and the near-eye display device includes temples configured with touch zones, the user may press or touch the temples of the near-eye display device twice, to cause the near-eye display device to determine that the invocation stop instruction corresponding to the virtual cursor is received according to the received double pressing operation or double touch operation. Then, the virtual cursor may be hidden in the user interface according to the received invocation stop instruction.

In some other embodiments, the user may send the invocation stop instruction corresponding to the virtual cursor to the near-eye display device through voice. For instance, the user may say "stop invoking a virtual cursor", "hide a virtual cursor", or other voice configured to instruct the near-eye display device to stop invoking the virtual cursor. The near-eye display device may determine that the invocation stop instruction corresponding to the virtual cursor is received according to the voice of the user. Then, the virtual cursor may be hidden in the user interface according to the received invocation stop instruction, which is not limited herein.

In this way, the user may actively choose to stop invoking the virtual cursor or not, such that flexibility of the near-eye display device in invoking the virtual cursor or stopping invoking the virtual cursor is improved.

In some embodiments, display size information of the preset interactive object in the user interface is adjusted according to a preset device pose change range.

For instance, in a case that the user wears the near-eye display device and changes the pose of the near-eye display device by rotating the head, a rotation angle of the head of the user has a rotation angle range. Accordingly, the pose of the near-eye display device has a change range, and for instance, the preset device pose change range. Based on this, before the user determines the target interactive object in the user interface of the near-eye display device by adjusting the pose of the near-eye display device, the display size information of the preset interactive object in the user interface may be adjusted based on the change range of the pose of the near-eye display device, for instance, the preset device pose change range.

For instance, the near-eye display device may display the preset interactive object in the user interface with higher display size information. In this case, the preset interactive object displayed with the higher display size information may fully occupy the entire user interface. However, in a case that the preset interactive object is displayed with the higher display size information, if the user needs to determine the target interactive object in the user interface of the near-eye display device by changing the pose of the near-eye display device, the user generally needs to change the pose of the near-eye display device through an excessive change action of the head pose, resulting in poor convenience of the near-eye display device in determining the target interactive object. Based on this, the display size information of the preset interactive object may be decreased accordingly. The preset interactive object with decreased display size information may be merely arranged in a partial zone of the user interface. The display size information of the preset interactive object is decreased, and the preset interactive object may be centrally distributed within the partial zone of the user interface. Thus, the user does not need to change the pose of the near-eye display device through the excessive change action of the head pose. In this way, the user may select or operate the target interactive object in the user interface more easily, such that convenience of the near-eye display device in determining the target interactive object is improved, and convenience of the user in controlling the near-eye display device is improved.

For instance, the near-eye display device may display the preset interactive object in the user interface with lower display size information. For instance, in a case that the user does not need to operate the preset interactive object in the user interface temporarily, the preset interactive object may be lessened to the lower display size information. However, in a case that the preset interactive object is displayed with the lower display size information, if the user needs to determine the target interactive object in the user interface of the near-eye display device by changing the pose of the near-eye display device, the user generally needs to change the pose of the near-eye display device through a slight change action of the head pose, resulting in poor convenience of the near-eye display device in determining the target interactive object. Based on this, the display size information of the preset interactive object may be increased accordingly. The preset interactive object with increased display size information may be arranged in a partial zone of the user interface. The display size information of the preset interactive object is increased, and the preset interactive object may be distributed in the user interface in a dispersed manner. Thus, the user does not need to change the pose of the near-eye display device through the slight change action of the head pose. In this way, the user may select or operate the target interactive object in the user interface more easily, such that convenience of the near-eye display device in determining the target interactive object is improved, and convenience of the user in controlling the near-eye display device is improved.

S103, a corresponding operation is performed on the target interactive object according to operation information received by the near-eye display device.

In some embodiments, the near-eye display device may determine whether the operation information is received according to at least one of the operation of the user on the near-eye display device and the operation of the user on the device communicatively connected to the near-eye display device. Then, in a case that the operation information is received, the corresponding operation is performed on the target interactive object.

For instance, the step that the pose data of the near-eye display device is obtained includes the following steps: in response to a change in a head pose of a user wearing the near-eye display device, the pose data of the near-eye display device is obtained. The step that the corresponding operation is performed on the target interactive object according to the operation information received by the near-eye display device includes the following step: the corresponding operation is performed on the target interactive object according to the operation information received by a control device corresponding to the near-eye display device. The control device is communicatively connected to the near-eye display device.

In a case that the user wears the near-eye display device, if the head pose of the user changes, it may be determined that the user intends to control the near-eye display device by changing the head pose. Based on this, in response to a change in a head pose of a user wearing the near-eye display device, the pose data of the near-eye display device may be obtained. For instance, in a case that the head pose of the user changes, the pose of the near-eye display device may change, and the pose data of the near-eye display device may change accordingly. Thus, the pose data of the near-eye display device when the head pose of the user wearing the near-eye display device changes may be obtained. According to the pose data of the near-eye display device when the head pose of the user wearing the near-eye display device changes, the target interactive object in the user interface of the near-eye display device is determined, such that the near-eye display device operates the target interactive object.

For instance, the user may determine the operation information of the target interactive object through the touch operation, the pressing operation, or other operation information of the control device corresponding to the near-eye display device. The control device may be a smart ring, a smart bracelet or other devices communicatively connected to the near-eye display device, and is not limited herein. With the smart ring as the control device as an instance, in a case that the near-eye display device determines the target interactive object in the user interface, if the user touches or presses the smart ring, the near-eye display device may determine that the operation information of the target interactive object is received in response to the touch operation or pressing operation of the user on the smart ring. The near-eye display device may perform the corresponding operation on the target interactive object according to the received operation information.

For instance, the corresponding operation is performed on the target interactive object according to the operation information received by the device body of the near-eye display device.

For instance, the user may determine the operation information of the target interactive object through the touch operation, the pressing operation, or other operation information of the near-eye display device. The near-eye display device may include the device body. For instance, if the near-eye display device is AR glasses, VR glasses, or another eyewear device and the device body of the near-eye display device includes temples, in a case that the near-eye display device determines the target interactive object in the user interface, if the user touches or presses the temples, the near-eye display device may determine that the operation information of the target interactive object is received in response to the touch operation or the pressing operation of the user on the temples of the near-eye display device. The near-eye display device may perform the corresponding operation on the target interactive object according to the received operation information.

For instance, when the control device corresponding to the near-eye display device does not satisfy a preset control condition and receives the operation information triggered in the near-eye display device, the corresponding operation is performed on the target interactive object according to the operation information triggered in the near-eye display device. The preset control condition includes at least one of conditions that the control device receives the operation information and that a battery level of the control device is greater than or equal to a preset electric quantity threshold.

In some embodiments, in a case that the target interactive object is determined, the near-eye display device may preferably perform the corresponding operation on the target interactive object according to the operation information received by the control device corresponding to the near-eye display device. However, in a case that the control device, such as a smart ring or a smart bracelet, corresponding to the near-eye display device is lost, the user cannot operate the control device corresponding to the near-eye display device, and the control device corresponding to the near-eye display device fails to receive the operation information. In addition, in a case that a battery level of the control device, such as a smart ring or a smart bracelet, corresponding to the near-eye display device is too low, if the target interactive object is operated according to the operation of the user on the control device, complete power depletion of the smart ring, the smart bracelet and other devices is easily caused, making the user temporarily unable to use the smart ring, the smart bracelet and other devices, thus affecting user experience in using the smart ring, the smart bracelet and other devices.

Based on this, the near-eye display device needs to switch a mode of triggering the near-eye display device to operate the target interactive object. For instance, a mode of performing the corresponding operation on the target interactive object according to the operation information received by the control device corresponding to the near-eye display device may be switched to a mode of performing the corresponding operation on the target interactive object according to the operation information received by the device body of the near-eye display device.

For instance, the preset control condition may be set for the control device corresponding to the near-eye display device. The preset control condition includes at least one of conditions that the control device receives the operation information and that a battery level of the control device is greater than or equal to a preset electric quantity threshold. In a case that the control device satisfies the preset control condition, the corresponding operation may be performed on the target interactive object preferably according to the operation information received by the control device. In a case that the control device does not satisfy the preset control condition, a mode of performing the corresponding operation on the target interactive object according to the operation information received by the device body of the near-eye display device is switched to. That is, a mode of performing the corresponding operation on the target interactive object according to the operation information triggered by the user in the near-eye display device is switched to. The preset electric quantity threshold may be preset or set by the user, and is not limited herein.

It may be understood that the near-eye display device is communicatively connected to the control device, so the near-eye display device may obtain the battery level of the control device. When the control device is disconnected from the near-eye display device, the near-eye display device fails to receive the operation information sent by the control device. Thus, if the near-eye display device receives no operation information sent by the control device within a period, it may be determined that the near-eye display device does not receive the operation information.

For instance, the control device corresponding to the near-eye display device is the smart ring. For instance, in a case that the smart ring is lost and thus cannot receive any operation information, if the device body of the near-eye display device receives the operation information, the corresponding operation may be performed on the target interactive object according to the operation information received by the device body of the near-eye display device. Or, for instance, in a case that a battery level of the smart ring is less than the preset electric quantity threshold, if the device body of the near-eye display device receives the operation information, the corresponding operation may be performed on the target interactive object according to the operation information received by the device body of the near-eye display device. Or, for instance, in a case that the smart ring receives the operation information and a battery level of the smart ring is less than the preset electric quantity threshold, if the device body of the near-eye display device receives the operation information, the corresponding operation may be performed on the target interactive object according to the operation information received by the device body of the near-eye display device.

Clearly, the preset control condition is not limited herein. For instance, the preset control condition may be set to include at least one of conditions that the control device receives the operation information, that the battery level of the control device is greater than or equal to the preset electric quantity threshold, and that the control device is not in a power-saving mode. For instance, in a case that the smart ring receives the operation information and the smart ring is in a power-saving mode, if the device body of the near-eye display device also receives the operation information, the corresponding operation may be performed on the target interactive object according to the operation information received by the device body of the near-eye display device. The preset control condition may be preset or set by the user, which is not limited herein.

By switching the mode of triggering the near-eye display device to operate the target interactive object, the near-eye display device may still perform the corresponding operation on the target interactive object according to the operation information received by the device body of the near-eye display device in a case that the control device corresponding to the near-eye display device is lost or in a low-power state.

Clearly, the above description is not restrictive. After determining the target interactive object, the near-eye display device may further determine whether the operation information is received by detecting voice information, gesture information, and other information of the user, and perform the corresponding operation on the target interactive object in a case of receiving the operation information, which is not limited herein.

In this way, the near-eye display device may trigger the corresponding operation on the target interactive object according to the operation information received by the control device corresponding to the near-eye display device, or trigger the corresponding operation on the target interactive object according to the operation information received by the device body of the near-eye display device. Or, in a case that the control device corresponding to the near-eye display device is lost or in a low-power state, the mode of triggering the near-eye display device to operate the target interactive object is switched. In this way, convenience of the near-eye display device in operating the target interactive object is improved, and flexibility of the near-eye display device in operating the target interactive object is enhanced.

In some embodiments, in a case that the target interactive object is an icon, corresponding operations performed by the near-eye display device on the application icon may include displaying of an interaction interface corresponding to the icon, and for instance, displaying of the interaction interface on an upper layer of the user interface, or switching from the user interface to the interaction interface corresponding to the icon, which is not limited herein. In a case that the target interactive object is text, corresponding operations performed by the near-eye display device on the text may include text selection, editing, and other operations, which is not limited herein. In a case that the target interactive object is the real interactive object, corresponding operations performed by the near-eye display device on the real interactive object may include selection of a to-be-added virtual effect for the real interactive object, modification of a virtual effect of the real interactive object, and other operations, which is not limited herein.

In an illustrative embodiment, as shown in Fig. 3, when the virtual cursor performs leftward translation to the preset interactive object 1 in response to the change in the pose of the near-eye display device, the user may send the operation information of the preset interactive object 1 to the near-eye display device by pressing or touching a confirmation key on the smart ring. The near-eye display device may perform the corresponding operation on the preset interactive object 1 according to the received operation information. Clearly, the above description is not restrictive. For instance, the confirmation key may be implemented as a physical button, a touch zone, a gesture operation, and other forms, and is not limited herein.

Thus, the corresponding operation is performed on the target interactive object according to the operation information received by the near-eye display device. In this way, the user does not need to raise an arm for a long time to operate the target interactive object in the user interface of the near-eye display device, such that the arm of the user is less likely to feel tired. Thus, convenience of the near-eye display device in operating the target interactive object and control convenience of the near-eye display device are improved, and further user interactive experience with the near-eye display device is optimized.

In the the above examples, a method for controlling a near-eye display device is provided, the method for controlling the near-eye display device includes the following steps: the pose data of the near-eye display device is obtained; the target interactive object in the user interface of the near-eye display device is determined according to the pose data of the near-eye display device; and the corresponding operation is performed on the target interactive object according to the operation information received by the near-eye display device. Based on the obtained pose data of the near-eye display device, the near-eye display device may determine an operation demand of a user on the user interface of the near-eye display device, and for instance, determine the target interactive object in the user interface. In a case that the target interactive object is determined, the corresponding operation may be performed on the target interactive object according to the operation information received by the near-eye display device, such that the near-eye display device is controlled. During the user achieving the near-eye display device, as the near-eye display device is worn on a head of the user, the user may adjust a pose of the near-eye display device by changing a head pose. In response to a change in the pose of the near-eye display device, the obtained pose data of the near-eye display device may change accordingly. Thus, the near-eye display device is controlled later according to the obtained pose data of the near-eye display device, thus improving control convenience of the near-eye display device. For instance, the user does not need to raise an arm for a long time to control the near-eye display device, such that the arm of the user is less likely to feel tired, thus improving user interaction experience with the near-eye display device.

With reference to Fig. 5, Fig. 5 is a schematic block diagram of an apparatus for controlling a near-eye display device according to an example of the present disclosure. The apparatus for controlling the near-eye display device may be arranged in the near-eye display device or a server, and is configured to perform the above method for controlling a near-eye display device.

As shown in Fig. 5, the apparatus for controlling the near-eye display device includes: an obtainment module 110, an interactive object determination module 120, and an interactive module 130.

The obtainment module 110 is configured to obtain pose data of the near-eye display device.

The interactive object determination module 120 is configured to determine a target interactive object in a user interface of the near-eye display device according to the pose data of the near-eye display device.

The interactive module 130 is configured to perform a corresponding operation on the target interactive object according to operation information received by the near-eye display device.

For instance, the interactive object determination module 120 includes a position adjustment sub-module and a determination sub-module.

The position adjustment sub-module is configured to adjust a position of a virtual cursor in the user interface according to the pose data.

The determination sub-module is configured to determine, when a distance between the position of the virtual cursor in the user interface and a position of a preset interactive object in the user interface is less than or equal to a preset distance threshold, the preset interactive object as the target interactive object.

For instance, the apparatus for controlling a near-eye display device further includes a cursor display sub-module.

The cursor display sub-module is configured to display, when the near-eye display device receives an invocation instruction corresponding to the virtual cursor, the virtual cursor in the user interface.

For instance, the apparatus for controlling a near-eye display device further includes a cursor hiding sub-module.

The cursor hiding sub-module is configured to hide, if it is determined that the pose data of the near-eye display device is unchanged within a preset period after the virtual cursor is displayed in the user interface, the virtual cursor in the user interface.

For instance, the apparatus for controlling a near-eye display device further includes a cursor snapping sub-module.

The snapping sub-module is configured to snap the virtual cursor in the user interface onto the target interactive object.

For instance, the apparatus for controlling a near-eye display device further includes a display form determination sub-module and a display effect determination sub-module.

The display form determination sub-module is configured to determine a display form of the virtual cursor snapped onto the target interactive object according to an object type of the target interactive object.

The display effect determination sub-module is configured to determine a display effect of the virtual cursor snapped onto the target interactive object according to UI control information of the target interactive object.

For instance, the apparatus for controlling a near-eye display device further includes an interface adjustment sub-module.

The interface adjustment sub-module is configured to adjust display size information of a preset interactive object in the user interface according to a preset device pose change range.

For instance, the obtainment module 110 includes a first obtainment sub-module.

The first obtainment sub-module is configured to obtain, in response to a change in a head pose of a user wearing the near-eye display device, the pose data of the near-eye display device.

The interactive module 130 includes a first operation sub-module.

The first operation sub-module is configured to perform the corresponding operation on the target interactive object according to the operation information received by a control device corresponding to the near-eye display device. The control device is communicatively connected to the near-eye display device.

For instance, the interactive module 130 includes a second operation sub-module.

The second operation sub-module is configured to perform, when a control device corresponding to the near-eye display device does not satisfy a preset control condition and receives the operation information triggered in the near-eye display device, the corresponding operation on the target interactive object according to the operation information triggered in the near-eye display device. The preset control condition includes at least one of conditions that the control device receives the operation information and that a battery level of the control device is greater than or equal to a preset electric quantity threshold.

It should be noted that those skilled in the art may clearly understand that, for convenience and conciseness of description, reference may be made to a corresponding process in the above method example for a specific work process of the above apparatus, modules and units, which will not be repeated herein.

The method of the present disclosure is applicable to a wide variety of general-purpose or special-purpose computer system environments or configurations, such as a personal computer, a server computer, a handheld device or portable device, a tablet device, a multiprocessor system, a microprocessor-based system, a set-top box, a programmable consumer electronic device, a network Personal Computer (PC), a minicomputer, a mainframe computer, and a distributed calculation environment including any of the above systems or devices. The present disclosure may be described in a general context of a computer-executable instruction, such as a program module, executed by a computer. Generally, the program modules include routines, programs, objects, components, data structures, etc. for performing specific tasks or implementing specific abstract data types. Or, the present disclosure may be implemented in distributed calculation environments. In the distributed calculation environments, a task is performed by a remote processing device connected through a communication network. In the distributed calculation environments, the program modules may be located in both local and remote computer storage media including storage devices.

For instance, the above method and apparatus may be implemented in a form of a computer program, and the computer program may run on a near-eye display device. For instance, the near-eye display device may include VR glasses, AR glasses, VR headsets, AR headsets, etc., and is not limited herein.

With reference to Fig. 6, Fig. 6 is a schematic structural block diagram of a near-eye display device according to an example of the present disclosure.

As shown in Fig. 6, the near-eye display device includes a memory and a processor. The memory and the processor may be connected through a system bus, and the memory may include a storage medium and an internal memory.

The storage medium may store an operating system and a computer program. When the computer program is executed, the processor is caused to perform any method for controlling a near-eye display device.

The processor is configured to provide calculation and control capabilities to support operation of the entire near-eye display device.

The internal memory provides an operating environment for the computer program in the storage medium. When the computer program is executed by the processor, the processor is caused to perform any method for controlling a near-eye display device.

It may be understood by those skilled in the art that a structure shown in Fig. 6 is merely a block diagram of part of a structure related to the solution of the present disclosure, and does not constitute a limitation to the near-eye display device to which the solution of the present disclosure is applied. Specifically, the near-eye display device may include more or fewer components than those shown in the figure, some components may be combined, or different component arrangements are provided.

It should be understood that the processor may be a Central Processing Unit (CPU). Or, the processor may be another general-purpose processor, a digital signal processor (DSP), an Application Specific Integrated Circuit (ASIC), a Field-Programmable Gate Array (FPGA) or another programmable logic device, a discrete gate or a transistor logic device, a discrete hardware component, etc. The general-purpose processor may be a microprocessor, or the processor may be any conventional processor or another processor.

In an example, the processor is configured to execute the computer program, and implement, when executing the computer program, the following steps:
pose data of a near-eye display device is obtained;
a target interactive object in a user interface of the near-eye display device is determined according to the pose data of the near-eye display device; and
a corresponding operation is performed on the target interactive object according to operation information received by the near-eye display device.

It should be noted that those skilled in the art may clearly understand that, for convenience and conciseness of description, reference may be made to a corresponding process in the above example of the method for controlling a near-eye display device for a specific work process of the above control of the near-eye display device, which will not be repeated herein.

An example of the present disclosure further provides a computer-readable storage medium. The computer-readable storage medium stores a computer program. Reference may be made to all examples of the method for controlling a near-eye display device in the present disclosure for the method implemented when the computer program is executed by a processor.

The computer-readable storage medium may be an internal storage unit of the near-eye display device described in the above examples, such as a hard disk or an internal memory of the near-eye display device. Or, the computer-readable storage medium may be an external storage device of the near-eye display device, such as a plug-in hard disk arranged on the near-eye display device, a Smart Media Card (SMC), a Secure Digital (SD) card, and a flash card.

It should be understood that the terms used in the description of the present disclosure are merely for the purpose of describing specific examples and are not intended to limit the present disclosure. As used in the description and the appended claims of the present disclosure, the singular forms "a", "an", "one" and "the" are intended to include plural forms as well, unless otherwise explicitly indicted in the context.

It should be understood that the term "and/or" used in the description and the appended claims of the present disclosure refers to any combination and all possible combinations of one or more of the associated listed items, which includes the combinations. It should be noted that terms "include", "comprise", "involve", or their any other variations herein are intended to cover non-exclusive inclusions, such that a process, a method, an article, or a system including a series of elements not only includes those elements, but also includes other elements that are not explicitly listed, or includes inherent elements of the process, the method, the article, or the system. Without more limitations, the elements defined by the sentence "include a ..." or "comprise a ..." do not exclude existence of other same elements in the process, the method, the article, or the system including the elements.

Sequence numbers of the examples of the present disclosure are for description and do not indicate advantages and disadvantages of the examples. What are described above is merely specific embodiments of the present disclosure, and is not intended to limit the protection scope of the present disclosure. Those skilled in the art may easily conceive any equivalent modifications or substitutions within the technical scope disclosed in the present disclosure. The modifications or substitutions should fall within the protection scope of the present disclosure. Thus, the protection scope of the present disclosure shall be subject to the protection scope of the claims.

## Claims

1. A method for controlling a near-eye display device, comprising:
obtaining pose data of the near-eye display device;
determining a target interactive object in a user interface of the near-eye display device according to the pose data of the near-eye display device; and
performing a corresponding operation on the target interactive object according to operation information received by the near-eye display device.

2. The control method as claimed in claim 1, wherein the determining a target interactive object in a user interface of the near-eye display device according to the pose data of the near-eye display device comprises:
adjusting a position of a virtual cursor in the user interface according to the pose data; and
determining, when a distance between the position of the virtual cursor in the user interface and a position of a preset interactive object in the user interface is less than or equal to a preset distance threshold, the preset interactive object as the target interactive object.

3. The control method as claimed in claim 2, further comprising:
displaying, when the near-eye display device receives an invocation instruction corresponding to the virtual cursor, the virtual cursor in the user interface.

4. The control method as claimed in claim 3, further comprising:
hiding, when it is determined that the pose data of the near-eye display device is unchanged within a preset period after the virtual cursor is displayed in the user interface, the virtual cursor in the user interface.

5. The control method as claimed in claim 1, wherein after the determining a target interactive object in a user interface of the near-eye display device according to the pose data of the near-eye display device, the control method further comprises:
snapping the virtual cursor in the user interface onto the target interactive object.

6. The control method as claimed in claim 5, wherein after the snapping the virtual cursor in the user interface onto the target interactive object, the control method further comprises:
determining a display form of the virtual cursor snapped onto the target interactive object according to an object type of the target interactive object;
and/or,
determining a display effect of the virtual cursor snapped onto the target interactive object according to UI control information of the target interactive object.

7. The control method as claimed in claim 1, wherein before the determining a target interactive object in a user interface of the near-eye display device according to the pose data of the near-eye display device, the control method further comprises:
adjusting display size information of a preset interactive object in the user interface according to a preset device pose change range.

8. The control method as claimed in claim 1, wherein the obtaining pose data of the near-eye display device comprises:
obtaining, in response to a change in a head pose of a user wearing the near-eye display device, the pose data of the near-eye display device; and
the performing a corresponding operation on the target interactive object according to operation information received by the near-eye display device comprises:
performing the corresponding operation on the target interactive object according to the operation information received by a control device corresponding to the near-eye display device, wherein the control device is communicatively connected to the near-eye display device.

9. The control method as claimed in claim 1, wherein the performing a corresponding operation on the target interactive object according to operation information received by the near-eye display device comprises:
performing, when a control device corresponding to the near-eye display device does not satisfy a preset control condition and receives operation information triggered in the near-eye display device, the corresponding operation on the target interactive object according to the operation information triggered in the near-eye display device, wherein
the preset control condition includes at least one of conditions that the control device receives the operation information and that a battery level of the control device is greater than or equal to a preset electric quantity threshold.

10. An apparatus for controlling a near-eye display device, comprising:
an obtainment module, configured to obtain pose data of the near-eye display device;
an interactive object determination module, configured to determine a target interactive object in a user interface of the near-eye display device according to the pose data of the near-eye display device; and
an interactive module, configured to perform a corresponding operation on the target interactive object according to operation information received by the near-eye display device.

11. The apparatus as claimed in claim 10, wherein the interactive object determination module comprises a position adjustment sub-module and a determination sub-module, wherein
the position adjustment sub-module is configured to adjust a position of a virtual cursor in the user interface according to the pose data; and
the determination sub-module is configured to determine, when a distance between the position of the virtual cursor in the user interface and a position of a preset interactive object in the user interface is less than or equal to a preset distance threshold, the preset interactive object as the target interactive object.

12. The apparatus as claimed in claim 11, further comprising a cursor display sub-module, wherein
the cursor display sub-module is configured to display, when the near-eye display device receives an invocation instruction corresponding to the virtual cursor, the virtual cursor in the user interface.

13. The apparatus as claimed in claim 12, further comprising a cursor hiding sub-module, wherein
the cursor hiding sub-module is configured to hide, when it is determined that the pose data of the near-eye display device is unchanged within a preset period after the virtual cursor is displayed in the user interface, the virtual cursor in the user interface.

14. The apparatus as claimed in claim 10, further comprising a cursor snapping sub-module, wherein
the cursor snapping sub-module is configured to snap the virtual cursor in the user interface onto the target interactive object.

15. The apparatus as claimed in claim 14, further comprising a display form determination sub-module and a display effect determination sub-module, wherein
the display form determination sub-module is configured to determine a display form of the virtual cursor snapped onto the target interactive object according to an object type of the target interactive object; and
the display effect determination sub-module is configured to determine a display effect of the virtual cursor snapped onto the target interactive object according to UI control information of the target interactive object.

16. The method as claimed in claim 10, further comprising an interface adjustment sub-module, wherein
the interface adjustment sub-module is configured to adjust display size information of a preset interactive object in the user interface according to a preset device pose change range.

17. The apparatus as claimed in claim 10, wherein the obtainment module comprises a first obtainment sub-module, wherein
the first obtainment sub-module is configured to obtain, in response to a change in a head pose of a user wearing the near-eye display device, the pose data of the near-eye display device; and
the interactive module comprises a first operation sub-module, wherein
the first operation sub-module is configured to perform the corresponding operation on the target interactive object according to the operation information received by a control device corresponding to the near-eye display device, wherein the control device is communicatively connected to the near-eye display device.

18. The apparatus as claimed in claim 10, wherein the interactive module comprises a second operation sub-module, wherein
the second operation sub-module is configured to perform, when a control device corresponding to the near-eye display device does not satisfy a preset control condition and receives the operation information triggered in the near-eye display device, the corresponding operation on the target interactive object according to the operation information triggered in the near-eye display device, wherein the preset control condition includes at least one of conditions that the control device receives the operation information and that a battery level of the control device is greater than or equal to a preset electric quantity threshold.

19. A near-eye display device, comprising a memory and a processor, wherein
the memory is configured to store a computer program; and
the processor is configured to execute the computer program, and implement, when executing the computer program, the following steps:
obtaining pose data of the near-eye display device;
determining a target interactive object in a user interface of the near-eye display device according to the pose data of the near-eye display device; and
performing a corresponding operation on the target interactive object according to operation information received by the near-eye display device.

20. A computer-readable storage medium, storing a computer program, wherein when the computer program is executed by a processor, the following steps are implemented:
obtaining pose data of a near-eye display device;
determining a target interactive object in a user interface of the near-eye display device according to the pose data of the near-eye display device; and
performing a corresponding operation on the target interactive object according to operation information received by the near-eye display device.
